# EUROPÄISCHE PATENTANMELDUNG

(11) **EP 0 635 346 A1**
(43) Veröffentlichungstag der Anmeldung: **25.01.1995**
(21) Anmeldenummer: 94109411.2
(22) Anmeldetag: 17.06.1994
(51) Int. Cl.: B29B 17/00, B29B 13/02, C04B 18/04, B09B 3/00, B29K 103/08, B29K 105/26, B29L 31/10

(54) **Verfahren zur Aufbereitung von Kunststoffabfällen**

(30) Priorität: 08.07.1993 DE 4322771
(71) Anmelder: WILLY KLAUSMANN, Inh. Hans Klausmann, Betonsteinwerk, Strassenbaustoffe, Güternahverkehr, D-47809 Krefeld (DE)
(72) Erfinder: Klausmann, Hans, D-47809 Krefeld (DE); Klausmann, Ralf, Dipl.-Ing., D-47809 Krefeld (DE)
(74) Vertreter: Stark, Walter, Dr.-Ing.

(57) **Zusammenfassung**

Die Erfindung betrifft ein Verfahren zur Aufbereitung von Kunststoffabfällen, die in zerkleinertem Zustand Baustoffen, insbesondere für den Straßenbau, als Füllmaterial beigegeben werden. Um die Bindung zwischen den zerkleinerten Kunststoffabfällen und den mineralischen Baustoffen zu verbessern, sollen die Kunststoffabfälle mit körnigen Mineralstoffen gemischt und dabei auf eine Temperatur im Bereich ihres Schmelzpunktes erwärmt werden. Das so hergestellte Kunststoff-Mineralgemisch kann problemlos mit Baustoffen für den Straßenbau weiterverarbeitet werden.

## Beschreibung

Die Erfindung betrifft ein Verfahren zur Aufbereitung von Kunststoffabfällen, die in zerkleinertem Zustand Baustoffen für den Straßenbau als Füllmaterial beigegeben werden. Bekannt ist es, zerkleinerte Kunststoffabfälle als Füllmaterial, Frostschutzmaterial und dergleichen den Baustoffen für Tragschichten im Straßenbau hinzuzufügen. Dabei wird allerdings immer wieder eine mangelhafte bis gar keine Bindung der Kunststoffabfälle an die mineralischen Baustoffe beobachtet.

Aufgabe der Erfindung ist es, ein Verfahren der eingangs beschriebenen Gattung anzugeben, mit dem die Kunststoffabfälle so bereitet werden, daß die Bindung an die mineralischen Baustoffe verbessert wird.

Diese Aufgabe wird dadurch gelöst, daß die Kunststoffabfälle mit körnigen Mineralstoffen gemischt und dabei auf eine Temperatur im Bereich ihres Schmelzpunktes erwärmt werden. Insbesondere können die Kunststoffabfälle und die Mineralstoffe beim Mischen erwärmt werden.

Man kann das Verfahren auch so führen, daß die Kunststoffabfälle kalt mit erwärmten Mineralstoffen gemischt werden. Nach bevorzugter Ausführung der Erfindung sollen die Mineralstoffe auf eine Temperatur im Bereich des Schmelzpunktes der Kunststoffabfälle erwärmt und dann mit den Kunststoffabfällen gemischt werden.

Es kann vorteilhaft sein, die Kunststoffabfälle vor dem Mischen auf Körnungen bis zu 50 mm zu zerkleinern und/oder auf eine Temperatur unterhalb ihres Erweichungspunktes vorzuwärmen.

In der Praxis werden die auf eine Körnung von 0 bis 50 mm zerkleinerten Kunststoffabfälle im kalten Zustand oder vorgewärmt auf eine Temperatur unterhalb ihres Erweichungspunktes in einen Mischer gegeben. Dem Mischer werden ferner Mineralstoffe aufgegeben, die entweder bis in den Bereich des Schmelzpunktes der Kunststoffe erwärmt sind oder die zusammen mit den Kunststoffabfällen bei ständiger Bewegung im Mischer erwärmt werden. Durch den Mischprozeß mit den erwärmten Mineralstoffen wird die Oberfläche der zerkleinerten Kunststoffabfälle verändert, insbesondere aufgeweicht, so daß die Kunststoffpartikel mit den Mineralstoffen verkleben.

Nach dieser Aufbereitung läßt sich das hergestellte Kunststoff-Mineralgemisch problemlos zu Baustoffen für den Straßenbau weiterverarbeiten.

## Patentansprüche

1. Verfahren zur Aufbereitung von Kunststoffabfällen, die in zerkleinertem Zustand Baustoffen, insbesondere für den Straßenbau, als Füllmaterial beigegeben werden, dadurch gekennzeichnet, daß die Kunststoffabfälle mit körnigen Mineralstoffen gemischt und dabei auf eine Temperatur im Bereich ihres Schmelzpunktes erwärmt werden.

2. Verfahren nach Anspruch 1, dadurch gekennzeichnet, daß die Kunststoffabfälle und die Mineralstoffe beim Mischen erwärmt werden.

3. Verfahren nach Anspruch 1, dadurch gekennzeichnet, daß die zerkleinerten Kunststoffabfälle kalt mit erwärmten Mineralstoffen gemischt werden.

4. Verfahren nach Anspruch 3, dadurch gekennzeichnet, daß die Mineralstoffe auf eine Temperatur im Bereich des Schmelzpunktes der Kunststoffe erwärmt und dann mit den Kunststoffabfällen gemischt werden.

5. Verfahren nach einem der Ansprüche 1 bis 4, dadurch gekennzeichnet, daß die Kunststoffabfälle auf Körnungen bis zu 50 mm zerkleinert werden.

6. Verfahren nach einem der Ansprüche 1 bis 5, dadurch gekennzeichnet, daß die zerkleinerten Kunststoffabfälle vor dem Mischen bis auf eine Temperatur unterhalb ihres Erweichungspunktes vorgewärmt werden.
